# EUROPÄISCHE PATENTANMELDUNG

(11) **EP 0 795 713 A1**
(43) Veröffentlichungstag der Anmeldung: **17.09.1997**
(21) Anmeldenummer: 97103955.7
(22) Anmeldetag: 10.03.1997
(51) Int. Cl.: F16L 55/00

(54) **Sicherungsvorrichtung für Verbindungs- und Anschlussstellen von Hochdruckschläuchen**

(30) Priorität: 14.03.1996 DE 19610000
(71) Anmelder: Votteler, Hans, 72379 Hechingen (DE)
(72) Erfinder: Votteler, Hans, 72379 Hechingen (DE)
(74) Vertreter: Möbus, Rudolf, Dipl.-Ing.

(57) **Zusammenfassung**

Eine Sicherungsvorrichtung für Verbindungs- und Anschlußstellen von Hochdruckschläuchen (11a, 11b) mit einem begrenzt elastischen, den Verbindungs- bzw. Anschlußbereich (10) übergreifenden Element (14), das beidseitig des Verbindungs- bzw. Anschlußbereichs (10) befestigt ist.

## Beschreibung

Die Erfindung betrifft eine Sicherungsvorrichtung für Verbindungs- und Anschlußstellen von Hochdruckschläuchen.

Die Anwendung von Hochdruckschläuchen erstreckt sich über einen großen Bereich, der von Haushaltshochdruckreinigern mit Drücken kleiner als 100 bar über Spritzgießmaschinen mit einem Arbeitsdruck von 300 bis 400 bar bis hin zu Betonsanierungen mit Wasser mit Drücken bis 3000 bar reicht. Die Hochdruckschläuche werden üblicherweise über mechanisch verpreßte Armaturen durch Verschraubungen an den entsprechenden Anschlußstellen befestigt. Bei längeren Schlauchleitungen sind außerdem Verbindungen von Schlauch zu Schlauch kaum zu vermeiden. Der kritische Bereich solcher Verbindungs- und Anschlußstellen liegt in der Preßverbindung von Armatur und Schlauch über eine Preßhülse, wo Bruchstellen bevorzugt entstchen können. Beim Bruch eines Schlauches unter Hochdruck werden große Impulse freigesetzt, unter deren Wirkung das gelöste Schlauchende unkontrolliert herumschlagen kann und sowohl für Maschine und Material als auch für Menschen ein erhebliches Sicherheitsrisiko darstellt. Auf dem Markt sind Vorrichtungen mit Fangseilen erhältlich, welche beidseitig des Verbindungs- bzw. Anschlußbereichs am Schlauch befestigt sind, so daß die Schlauchstücke nach einem Lösen der Verbindung von Schlauch und Armatur über das Fangseil verbunden bleiben. Die festen Fangseile können jedoch den freigewordenen Kraftstoß nicht vollständig absorbieren, so daß ein Sicherheitsrisiko in der unmittelbaren Umgebung der Bruchstelle durch das Ausschlagen der Schläuche bestehen bleibt. Unpraktisch ist es auch, daß die Fangseile an Unebenheiten des Bodens o. dgl. hängenbleiben können. Außerdem werden die Fangseile über Klebemanschetten am Schlauch befestigt, wobei die maximale Zugfestigkeit dieser Klebeverbindungen nicht vorhersagbar ist. Diese Befestigungsart ist zudem relativ aufwendig.

Aus diesem Stand der Technik ergibt sich die Aufgabe, eine Sicherungsvorrichtung für Verbindungs- und Anschlußstellen von Hochdruckschläuchen zu schaffen, welche die obengenannten Nachteile vermeidet.

Die Aufgabe wird mit einer Sicherheitsvorrichtung der eingangs genannten Art erfindungsgemäß gelöst durch ein begrenzt elastisches, den Verbindungs- bzw. Anschlußbereich übergreifendes Element, das beidseitig des Verbindungs- bzw. Anschlußbereichs befestigt ist. Das begrenzt elastische Element kann beim Lösen des Schlauches aus der Armatur den freigewordenen Energie-Impuls effektiver absorbieren als ein starres Element, indem es nachgibt und sich dabei verformt, und damit ein unkontrolliertes Ausschlagen des Schlauchendes praktisch ausschließen.

Vorteilhafterweise kann das Sicherungselement mittels an den Schläuchen oder Armaturen form- oder reibschlüssig anordenbaren Manschetten befestigt sein. Die Form- und Reibschlußkräfte lassen sich sicherer abschätzen als Haftkräfte bei Klebeverbindungen, so daß definierte Angaben über die Belastbarkeit der Verbindungen möglich sind. Im Falle einer Beschädigung kann das Sicherungselement auch sehr leicht und einfach ausgetauscht werden. Ebenso ist eine Nachrüstung vorhandener Schläuche mit der Sicherheitsvorrichtung einfach durchführbar.

Es gibt verschiedene Möglichkeiten zur vorteilhaften Ausgestaltung des Sicherungselements. So kann es beispielsweise durch eine den Verbindungs- bzw. Anschlußbereich übergreifende Schraubenfeder oder eine Wendel aus elastischen Bändern oder durch ein elastisches Schlauchstück gebildet sein. Für relativ niedrige Drücke läßt sich auch ein Faltenbalg aus einem elastischen Material einsetzen.

Nachfolgend wird ein bevorzugtes Ausführungsbeispiel anhand der Zeichnung näher erläutert.

Es zeigen:
- Fig. 1: eine teilweise geschnittene Ansicht einer erfindungsgemäßen Sicherungsvorrichtung für eine Verbindungsstelle von Hochdruckschläuchen,
- Fig. 2: eine teilweise geschnittene Ansicht einer erfindungsgemäßen Sicherungsvorrichtung für eine Anschlußstelle eines Hochdruckschlauches;
- Fig. 3: eine teilweise geschnittene Ansicht einer zweiten Sicherungsvorrichtung für eine Anschlußstelle eines Hochdruckschlauches.

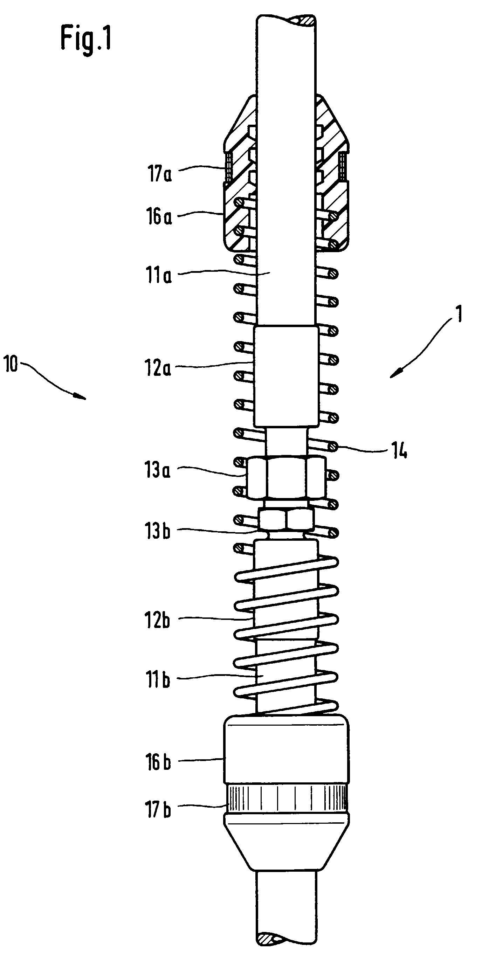

Fig. 1 zeigt eine teilweise geschnittene Ansicht einer erfindungsgemäßen Sicherungsvorrichtung 1 für eine Verbindungsstelle 10 von Hochdruckschläuchen 11a und 11b. Die Schläuche 11a, 11b sind über Preßhülsen 12a, 12b an den Armaturen 13a, 13b befestigt, welche durch Verschraubung miteinander verbunden sind. Das Sicherungselement 14 in Form einer Schraubenfeder erstreckt sieh über die Verbindungsstelle 10 und ist mittels Manschetten 16a, 16b mit Hilfe von Metallbändern 17a, 17b reibschlüssig an den Schläuchen 11a, 11b befestigt. Vorzugsweise sind die Manschetten 16a, 16b aus Elastomeren hergestellt und mit der Sehraubenfeder 14 durch Anvulkanisation verbunden. Diese Verbindung ist in der geschnittenen Ansicht der Manschette 16a und der Feder 14 deutlich zu sehen. Die Schraubenfeder 14 umgibt die Verbindungsstelle 10 so dicht, daß die Handhabung der Schlauchleitung durch Verhaken an Bodenunebenheiten oder vorstehenden Elementen nicht beeinträchtigt wird.

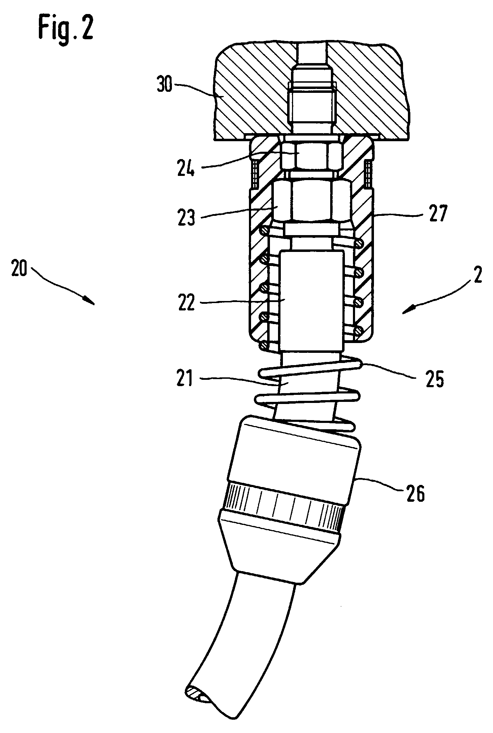

Fig. 2 zeigt eine teilweise geschnittene Ansicht einer erfindungsgemäßen Sicherungsvorrichtung 2 für eine Anschlußstelle 20 eines Hochdruckschlauches 21 an einem Aggregat 30. Der Schlauch 21 ist über die Preßhülse 22 an der Armatur 23, 24 befestigt, welche mit dem Aggregat 30 verschraubt ist. Das aus einer Schraubenfeder gebildete Sicherungselement 25 ist mit den Manschetten 26 und 27 verbunden, wobei die Manschette 26 am Schlauch 21 reibschlüssig und die Manschette 27 an der Armatur 23, 24 formschlüssig befestigt ist. Die Darstellung in Fig. 2 deutet an, wie flexibel die erfindungsgemäße Sicherungsvorrichtung ist.

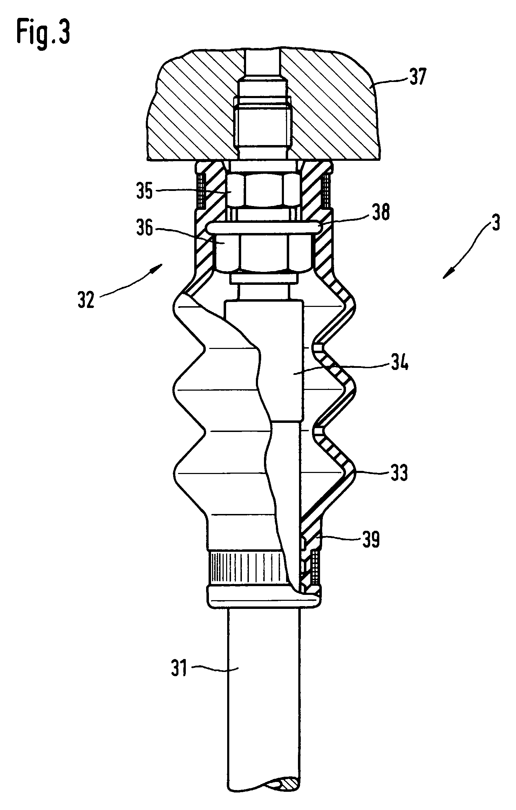

In Fig. 3 ist eine zweite Sicherungsvorrichtung für eine Anschlußstelle 32 eines Hochdruckschlauches 31 mit geringeren Arbeitsdrücken, beispielsweise eines Druckluftschlauches eines Haushaltshochdruckreinigers, gezeigt. Das Sicherungselement 33, das eine Preßhülse 34 des Schlauches 31 sowie Armaturen 35, 36 eines Druckaggregats 37 übergreift, besteht hier aus einem Faltenbalg aus Gummi. An dieses Sicherungselement 33 sind Manschetten 38, 39 angeformt, die wiederum formschlüssig an der Armatur 35, 36 bzw. reibschlüssig am Schlauch 31 befestigt sind.

## Patentansprüche

1. Sicherungsvorrichtung für Verbindungs- und Anschlußstellen von Hochdruckschläuchen, gekennzeichnet durch ein begrenzt elastisches, den Verbindungs- bzw. Anschlußbereich übergreifendes Element (14, 25, 33), das beidseitig des Verbindungs- bzw. Anschlußbereichs (10, 20, 32) befestigt ist.

2. Sicherungsvorrichtung nach Anspruch 1, dadurch gekennzeichnet, daß das Sicherungselement (14, 25, 33) mittels an den Schläuchen (11a, 11b, 21, 31) oder Armaturen (23, 24; 35, 36) vorzugsweise über Spannbänder (17a, 17b) reib- oder formschlüssig anordenbaren Manschetten (16a, 16b, 26, 27, 38, 39) befestigt ist.

3. Sicherungsvorrichtung nach Anspruch 1 oder 2, dadurch gekennzeichnet, daß das Sicherungselement (14, 25) durch eine den Verbindungs- bzw. Anschlußbereich (10, 20) übergreifende Schraubenfeder (14) gebildet ist.

4. Sicherungsvorrichtung nach Anspruch 1 oder 2, dadurch gekennzeichnet, daß das Sicherungselement (14, 25, 33) durch eine den Verbindungs- bzw. Anschlußbereich (10, 20, 32) übergreifende Wendel aus elastischen Bändern gebildet ist.

5. Sicherungsvorrichtung nach Anspruch 1 oder 2, dadurch gekennzeichnet, daß das Sicherungselement (14, 25, 33) durch ein den Verbindungs- bzw. Anschlußbereich (10, 20, 32) übergreifendes elastisches Schlauchstück gebildet ist.

6. Sicherungsvorrichtung nach Anspruch 1 oder 2, dadurch gekennzeichnet, daß das Sicherungselement (33) durch einen den Verbindungs- bzw. Anschlußbereich (32) übergreifenden Faltenbalg aus einem elastischen Material gebildet ist.
